# EUROPÄISCHE PATENTANMELDUNG

(11) **EP 0 876 949 A1**
(43) Veröffentlichungstag der Anmeldung: **11.11.1998**
(21) Anmeldenummer: 98107581.5
(22) Anmeldetag: 25.04.1998
(51) Int. Cl.: B62B 19/02

(54) **Gleitkufe für Hand-, insbesondere Kinderwagen**

(30) Priorität: 09.05.1997 DE 19719534
(71) Anmelder: Schmidt & Lenhardt oHG, 71720 Oberstenfeld (DE)
(72) Erfinder: Schmidt, Peter, 88260 Argenbühl-Eisenharz (DE)
(74) Vertreter: Hübner, Hans-Joachim, Dipl.-Ing.

(57) **Zusammenfassung**

Um einen Kinderwagen mit Gleitkufen (16) zu versehen, wird für jedes Wagenrad (14) eine Aufnahmeschale (18) vorgesehen, die mittels eines Spanngurtes (48) am Wagenrad (14) festgespannt wird. Die Schale (18) hat eine ebene Bodenfläche, die einen Teil der Gleitkufe bildet. Die Schale (18) ist mit einem Doppelboden ausgestattet, zwischen dem sich eine einseitig offene Tasche befindet, in welche ein elastisch biegsamer Flachmaterialstreifen (20) verschiebbar eingreift. Dieser Flachmaterialstreifen (20) stabilisiert die dreiteilige Gleitkufe (16). Je nach Radstand des Kinderwagens greift der Flachmaterialstreifen (20) mehr oder weniger tief in die Taschen der Schalen (18) ein. Die Schalen (18) weisen verstellbare Radhalteorgane auf, die eine Anpassung an unterschiedliche Radgrößen zulassen. Die neue Gleitkufe ist universell für alle handelsüblichen Kinderwagen einsetzbar und setzt sich aus wenigen kleindimensionierten Einzelteilen zusammen, die sich bei Nichtgebrauch in einem Korb (54) des Kinderwagens unterbringen lassen.

## Beschreibung

Die Erfindung betrifft eine Gleitkufe zur Befestigung an Vorder- und Hinterrädern auf jeder Seite eines Handwagens, insbesondere Kinderwagens, mit zwei bodenseitig jeweis eine Gleitfläche aufweisenden Schalen zum Einstellen der Wagenräder und einem, die Schalen verbindenden, in seiner Länge verstellbaren Gleitkufenmittelabschnitt sowie mit Befestigungsmitteln zum Festspannen der Schalen an den Wagenrädern.

Eine derartige Gleitkufe ist aus der US-A-5,407,217 bekannt. Die beiden Schalen sind unterschiedlich ausgebildet und weisen einander zugewandte und überlappende Fortsätze auf, die miteinander lösbar verklemmt werden. Die Forsätze bilden den Gleitkufenmittelabschnitt, der somit in seiner Länge verstellbar ist. Der Spanngurt wird an schräg verlaufenden Gestellstreben verankert. Da nicht alle Handwagen solche Streben aufweisen, ist der bekannte Vorschlag nicht universell für alle Handwagen, insbesondere Kinderwagen einsetzbar. Gleiches gilt bezüglich der Konfiguration der Schalen, die nur Räder einer bestimmten Breite aufnehmen können. Der Auseinanderbau und die Wiedermontage der Gleitkufen, Vorgänge die beim Ein- oder Austritt in oder aus wettergeschützten Räumen jedesmal notwendig sind, sind unpraktisch.

Die DE-U-83 26 369 zeigt eine Einzelgleitkufe für jedes Wagenrad. Alle Gleitkufen sind identisch ausgebildet und werden mittels eines Spanngurtes am Rad befestigt, der den oberen Bereich des Wagenrades umschlingt, wobei seitliche Führungsbänder vorgesehen sind, die ein seitliches Abrutschen des Spanngurtes verhindern sollen. Die Gleitflächen sind vergleichsweise kurz, was sich ungünstig auf die Geradführung und auf die Lastverteilung auswirkt. Nachteilig ist weiterhin, daß sich die kurzen Gleitkufen mit den Rädern frei drehen können, was das Überfahren höherer Bordsteine problematisch macht.

Die DE-U-91 03 797 und die DE-U-75 01 466 zeigen ebenfalls separate Gleitkufen für jedes Wagenrad. Allen Vorschlägen ist der Nachteil gemeinsam, daß die Kufen nur für bestimmte Durchmesser und Breiten der Wagenräder geeignet sind.

Aufgabe der Erfindung ist es, eine Gleitkufe der eingangs genannten Art einfacher, in der Handhabung praktischer und so auszubilden, daß ein universeller Einsatz für die allermeisten gebräuchlichen Hand-, insbesondere Kinderwagen möglich ist.

Diese Aufgabe wird durch die Merkmale des Patentanspruches 1 gelöst.

Die Schalen sind so ausgelegt, daß auch die größten Räder von Kinderwagen aber auch eben sehr kleine Räder eingestellt werden können. Das gleiche gilt für Räder mit großer Breite und mit minimaler Breite und da die beiden Schalen auf jeder Seite an der Gleitkufe nicht fest verankert sind, paßt sich das Schalenpaar auf jeder Seite des Wagens selbsttätig dem Radstand an und da schließlich der Spanngurt in der Ebene des Rades um dessen oberen Umfangsbereich herumläuft, können Räder mit beliebig ausgebildeten Felgen, also beispielsweise auch Scheibenfelgen mit der neuen Gleitkufe bestückt werden. Der Gleitkufenmittelabschnitt kann entweder teleskopartig relativ zu den Schalen gelagert sein oder wird für den jeweiligen Wagentyp auf passende Länge geschnitten. Da die Bodenflächen der Schalen Gleitflächen bilden, genügt ein einfacher Flachmaterialstreifen, um die beiden Gleitkufenendabschnitte zu einer durchgehenden Gleitkufe miteinander zu verbinden.

Mit dem Merkmal von Anspruch 4 wird ein ganz entscheidender fahrtechnischer Vorteil erreicht, wenn nämlich der Wagen auf unebener Schneeoberfläche geschoben werden soll. Bei Überwindung einer Bordsteinkante beispielsweise verbiegt sich der Flachmaterialstreifen, sodaß die Kufenendabschnitte ihren guten Gleitkontakt beibehalten können. Die Gleitkufe kann dann - überspitzt dargestellt - eine S-Form annehmen, derart, daß die beiden Bodenflächen der Schalen auf unterschiedlichem Niveau parallel zu liegen kommen, weil der sie verbindende Flächenstreifen eine S-förmige Verformung zuläßt. Dadurch wird das Gewicht auf eine viel größere Fläche verteilt, als dies bei einer starren Kufe in unebenem Gelände der Fall wäre.

Die Länge des Flachmaterialstreifens kann so gewählt oder eingestellt werden, daß dieser bei auf ebenem Gelände stehenden Schalen an den Enden der jeweiligen Taschen anstößt. In unebenem Gelände paßt sich der Flächenstreifen dem Gelände an, verbiegt sich also, sodaß der Flachmaterialstreifen etwas weiter aus mindestens einer der Taschen herausgezogen wird.

Weitere Ausgestaltungen der Erfindung bilden die Gegenstände der übrigen Unteransprüche.

Anhand der Zeichnung, die ein Ausführungsbeispiel darstellt, wird die Erfindung näher beschrieben.

Es zeigt:

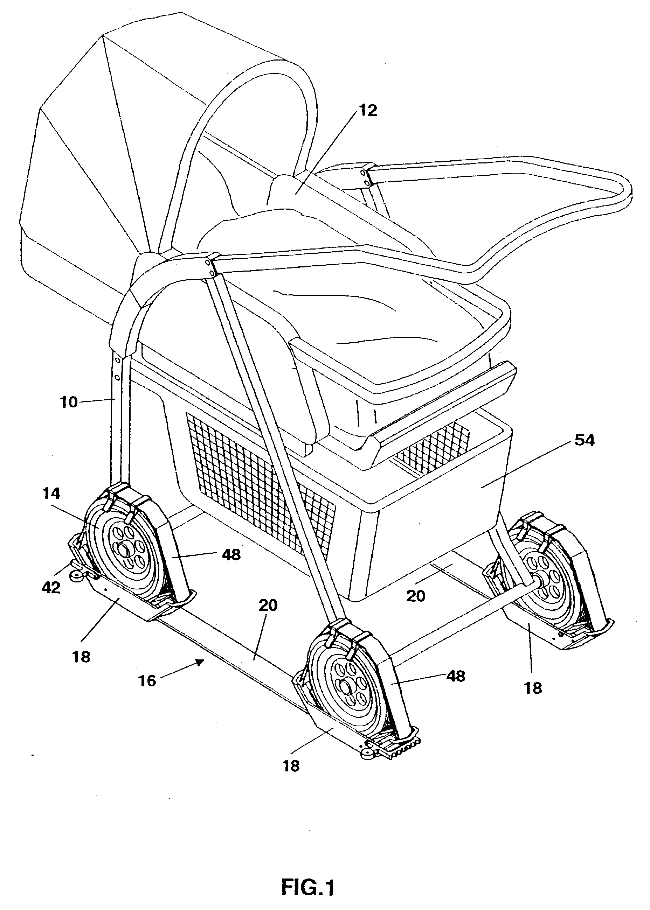

- FIG. 1: eine perspektivische Ansicht eines mit Gleitkufen gemäß der Erfindung ausgestatteten Kinderwagens,

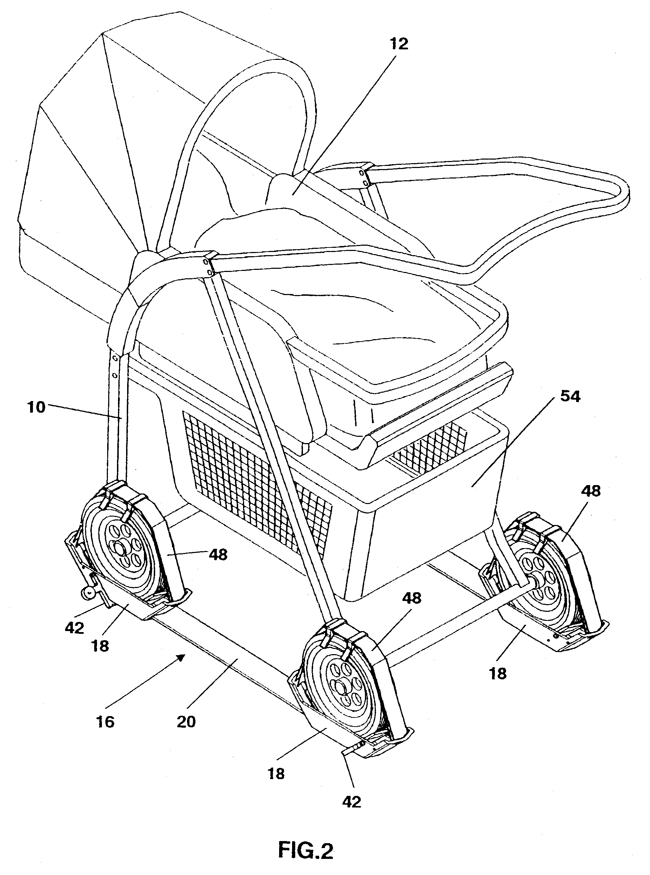

- FIG. 2: eine Ansicht ähnlich FIG. 1, jedoch mit in Wirkstellung geschwenkten Gleitstoppern,

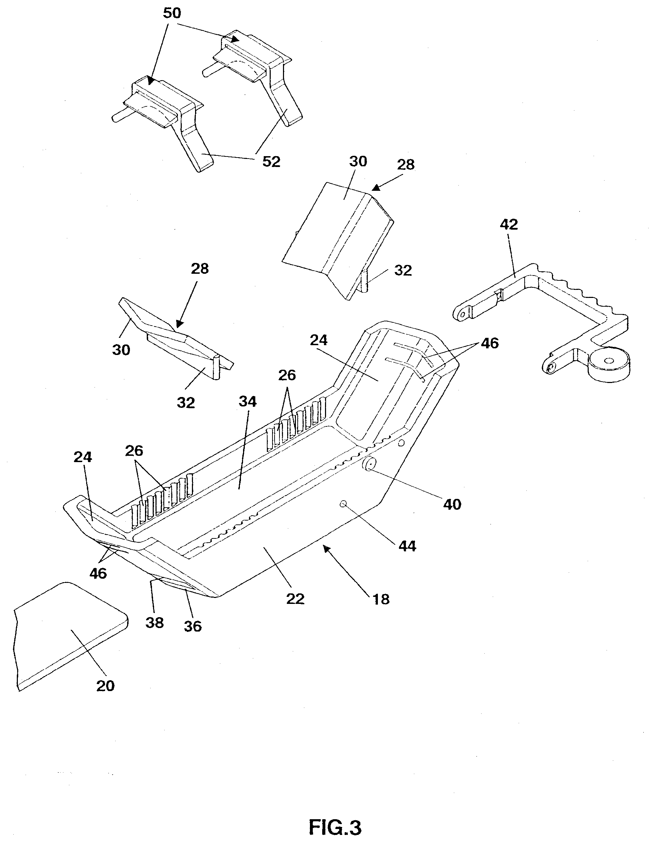

- FIG. 3: Einzelteile der Gleitkufe in auseinandergezogener Darstellung,

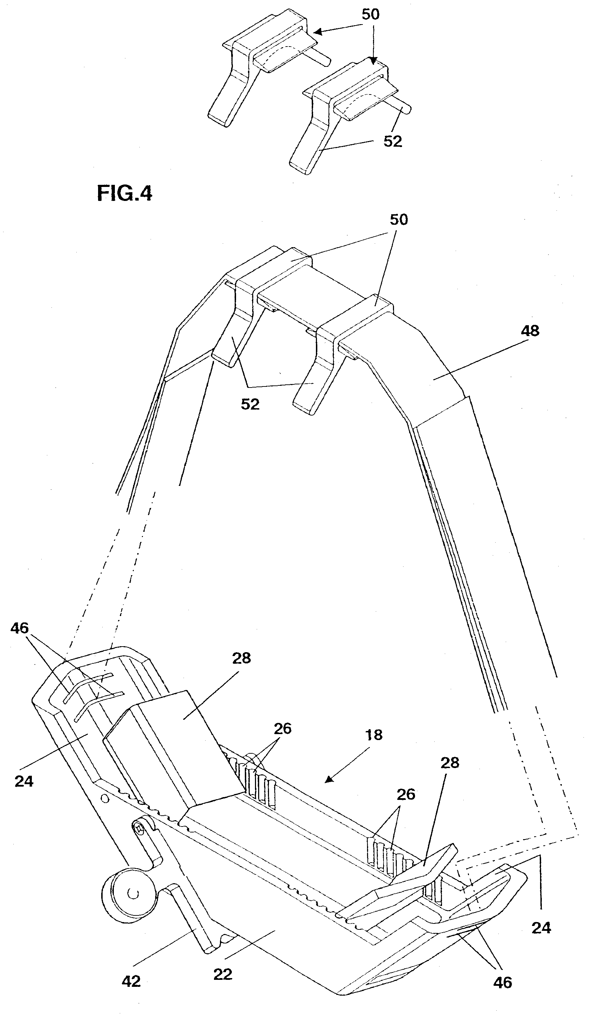

- FIG. 4: eine Radaufnahmeschale der Gleitkufe mit Spanngurt in auseinandergezogener Darstellung,
- FIG. 5: eine vergrößerte Ansicht eines an der Gleitkufe befestigten Kinderwagenrades mit in Ruhestellung befindlichem Gleitstopper, und

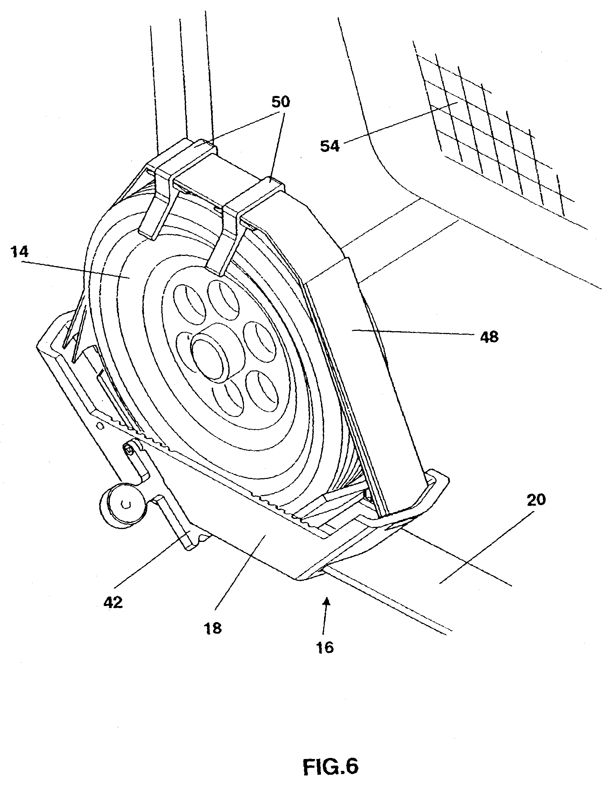

- FIG. 6: eine Ansicht ähnlich FIG. 5, jedoch mit in Gleitschutzstellung befindlichem Gleitstopper.

Das Gemeinsame aller Kinderwagen ist ein Gestell 10 mit Wagenkasten 12 und vier Rädern 14. Allein in Deutschland gibt es über 40 verschiedene Ausführungen von Kinderwagen, die sich hinsichtlich Gestellausführung, Radstand, Wagenbreite, Raddurchmesser und Reifenbreite sowie Felgenausführung unterscheiden. Das Ausführungsbeispiel zeigt eine Gleitkufe 16, die für alle diese vielen Kinderwagentypen verwendbar ist.

Die Gleitkufe 16 besteht aus zwei Radaufnahmeschalen 18, die durch einen Flachmaterialstreifen 20 miteinander verbunden sind. Die Schale 18 hat zwei niedrige parallele Seitenwände 22 und erhöhte Endquerwände 24, deren einander zugewandte Innenflächen im Querschnitt V-förmig ausgebildet sind. Der Abstand der beiden Endquerwände 24, die nach oben divergieren, ist so gewählt, daß die größten bei Kinderwägen vorkommenden Wagenräder einsetzbar sind, und der lichte Abstand der Seitenwände 22 ist auf die größte vorkommende Reifenbreite eingerichtet. An den Innenflächen der Seitenwände 22 ist eine Anzahl vorderer und hinterer Schiebeführungen 26 in Form lotrechter paralleler Nuten ausgebildet, die paarweise miteinander quer ausgefluchtet sind. In jeweils ein Paar quer ausgefluchteter Schiebeführungen 26 wird ein Radhalteorgan 28 eingesetzt, das eine V-förmig gewinkelte Querwand 30 sowie einen beidseitig vorspringenden Quersteg 32 aufweist. Die Querwand 30 bildet in der Seitenansicht mit dem Quersteg 32 einen Winkel im Bereich von 30° bis etwa 60°. Im Ausführungsbeispiel ist dieser Winkel etwa 45°. Der Quersteg 32 wird von oben her in ein Paar miteinander quer ausgerichteter Schiebeführungen 26 eingesetzt, wobei die Querwand 30 des Radhalteorgans 28 etwa parallel zur Endquerwand 24 verläuft. Die beiden Radhalteorgane für jede Schale 18 sind identisch und werden in spiegelbildlicher Anordnung mit passendem Abstand in die vorderen und hinteren Schiebeführungen 26 eingesetzt. Die Schiebepassung wird so gewählt, daß eine ausreichende Schwergängigkeit erreicht wird, die ein Herausfallen der Radhalteorgane aus der Schale während der Handhabung verhindert. Aufgrund der V-Form der Querwände 30 der Radhalteorgane 28 richtet sich die Schale 18 bezüglich der Radebene mittig aus, sodaß die Schale 18 auch bei Rädern mit sehr dünnen Reifen eine definierte Zwangsposition einnimmt.

Die Schale 18 hat einen Doppelboden, dessen oberer Boden 34 die Reifenaufstandsfläche aufweist und dessen unterer Boden 36 eine ebene Unterfläche bildet, welche einen Teil der Gleitkufenfläche darstellt. Zwischen den beiden Böden 34, 36 wird eine flache Tasche 38 gebildet, die nahezu über die ganze Breite der Schale und über nahezu die gesamte Länge des Schalenbodens 34, 36 reicht. Die Tasche 38 ist an einer Querseite offen und an der gegenüberliegenden Seite geschlossen.

Eine Gleitkufe 16 wird durch zwei Schalen 18 und den Flachmaterialstreifen 20 gebildet, dessen Endabschnitte in die Taschen 38 der Schalen 18 eingeschoben sind. Der Unterboden 36 hat nur eine sehr geringe Wandstärke, sodaß zwischen der Bodengleitfläche der Schale 18 und der Unterseite des Flachmaterialstreifens 20 nur ein kaum merkbarer Absatz gebildet wird, der das Gleitvermögen der Gleitkufe 16 nicht stört. Dank dieses Flachmaterialstreifens 20 ist die Gleitkufe 16 mit Doppelteleskopwirkung ausziehbar, sodaß sie für einen großen Radstandbereich des Kinderwagens eingesetzt werden kann. Mit zwei verschiedenen Längen der Flachmaterialstreifen 20 lassen sich alle Radstände und Radgrößen von Kinderwagen abdecken. Die Flachmaterialstreifen 20 bestehen aus elastisch biegsamem Material, wodurch es möglich wird, daß sich in Gebrauch der Gleitkufe ihre Gleitfläche einer unebenen Schneefläche anpaßt, wodurch das Gleitverhalten verbessert wird.

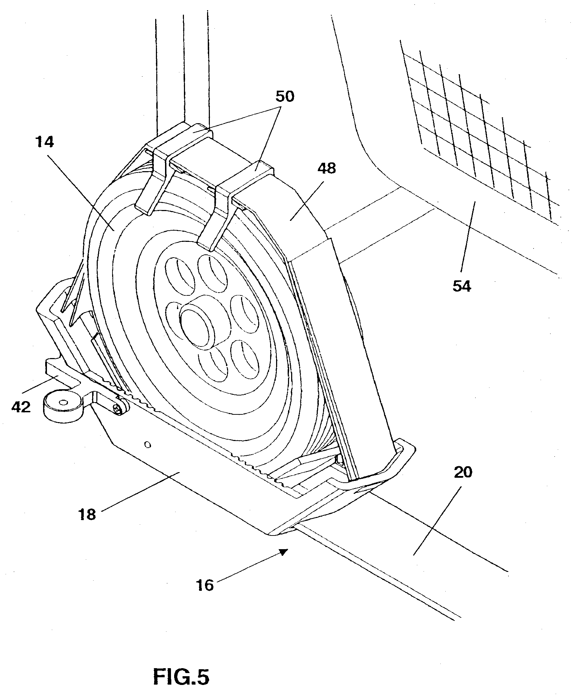

Nahe einem Ende der Schale 18 weist diese in ihren Seitenwänden 22 dicht unter den Seitenwand-Oberkanten ein Paar quer ausgerichteter Bohrungen auf, in denen Schrauben 40 eingeschraubt sind, welche einen U-Bügel schwenkbar lagern, der einen Gleitstopper 42 bildet. An den Außenflächen der Seitenwände 22 sind noch Rastvertiefungen 44 ausgebildet, in welche nicht dargestellte Rastkugeln in den Schenkeln des U-förmigen Gleitstoppers 42 einrasten und zwar jeweils in einer bodenparallelen Ruhestellung (FIG. 5) und einer schräg nach innen und unten weisenden Gleitschutz-Wirkstellung.

In den Endquerwänden 24 der Schale 18 sind Schlitze 46 zum schlaufenartigen Einfädeln eines Spanngurtes 48 vorgesehen, dessen Mitteltrum zwei Führungsgabeln 50 durchsetzt, deren Gabelschenkel 52 nach unten divergieren. Der Spanngurt 48 umschlingt den oberen Bereich des Radumfanges und die Führungsgabeln 50 sorgen dafür, daß sich der Spanngurt 48 bezüglich des Radreifens selbsttätig ausrichtet, und daß ein Abrutschen ausgeschlossen ist. Die beiden Enden des Spanngurtes 48 sind hier schlaufenartig zurückgeführt und am Spanntrum des Spanngurtes 48 mittels Textilhaftstreifen befestigt. Die beiden Gleitkufen 16 lassen sich nach Lockern der Spanngurte 48 von den Rädern 14 des Kinderwagens abnehmen und zerfallen in vier kleine Schalen 18 mit Spanngurten 48 sowie den beiden Flachmaterialstreifen 20. Diese Teile lassen sich bei Nichtgebrauch leicht in einem Korb 54 des Kinderwagens unterbringen.

## Patentansprüche

1. Gleitkufe zur Befestigung an Vorder- und Hinterrädern auf jeder Seite eines Handwagens, insbesondere Kinderwagens, mit zwei bodenseitig jeweis eine Gleitfläche aufweisenden Schalen (18) zum Einstellen der Wagenräder (14) und einem, die Schalen (18) verbindenden, in seiner Länge verstellbaren Gleitkufenmittelabschnitt (20) sowie mit Befestigungsmitteln (48) zum Festspannen der Schalen (18) an den Wagenrädern (14), **dadurch gekennzeichnet, daß** die beiden Schalen (18) gleich ausgebildet sind, jeder Schale (18) ein Spanngurt (48) mit veränderbarer Länge zugeordnet ist, die so bemessen ist, daß er den oberen Umfangsbereich des Wagenrades (14) umgreift, daß weiterhin die Schalen (18) je einen Doppelboden (34, 36) mit dazwischen angeordneter Tasche (38) und einer stirnseitigen Taschenöffnung aufweisen, daß die Taschenöffnungen beider Schalen einander zugewandt sind und daß der Gleitkufenmittelabschnitt (20) ein Flachmaterial-streifen ist, dessen Querschnittkontur derjenigen der Taschen (38) in den Schalen (18) entspricht und dessen Enden in den Taschen (38) längsverschiebbar geführt sind.

2. Gleitkufe nach Anspruch 1, **dadurch gekennzeichnet, daß** an mindestens einer Wand (22) mindestens einer Schale (18) ein aus seiner Ruhestellung in eine Wirkstellung abwärts bewegbarer Gleitstopper (42) angeordnet ist.

3. Gleitkufe nach Anspruch 2, **dadurch gekennzeichnet, daß** der Gleitstopper (42) aus einem U-Bügel besteht, dessen Bügelschenkel außen an den Seitenwänden (22) der Schale (18) angeordnet sind und der um eine geometrische Querachse derart schwenkbar gelagert ist, daß das Bügeljoch in der Ruhestellung benachbart einer Endquerwand (24) der Schale (18) und in der Wirkstellung unter dem Boden (36) der Schale (18) positioniert ist.

4. Gleitkufe nach Anspruch 1, **dadurch gekennzeichnet, daß** der Gleitkufenmittelabschnitt (20) elastisch biegsam ausgebildet ist.

5. Gleitkufe nach einem der Ansprüche 1 bis 4, **dadurch gekennzeichnet, daß** die Schalen (18) sowohl zur mittleren vertikalen Längsebene als auch zur mittleren vertikalen Querebene - allenfalls abgesehen von Löchern (44) und Durchbrüchen - jeweils spiegelsymmetrisch ausgebildet sind.

6. Gleitkufe nach einem der Ansprüche 1 bis 5, **dadurch gekennzeichnet, daß** jede Schale (18) hochgezogene Endquerwände (24) aufweist, an deren oberen Endbereichen Halterungen (46) für den Spanngurt (48) vorgesehen sind.

7. Gleitkufe nach einem der Ansprüche 1 bis 6, **dadurch gekennzeichnet, daß** dem Spanngurt (48) mindestens eine Führungsgabel (50) zugeordnet ist, deren Gabelschenkel (52) nach unten divergieren.

8. Gleitkufe nach einem der Ansprüche 1 bis 7, **dadurch gekennzeichnet, daß** in den einander zugewandten Innenflächen von Seitenwänden (22) jeder Schale (18) eine Anzahl vorderer und hinterer Schiebeführungen (26) zum wahlweisen Einsetzen vorderer und hinterer Radhalteorgane (28) vorgesehen ist.

9. Gleitkufe nach Anspruch 8, **dadurch gekennzeichnet, daß** das vordere und das hintere Radhalteorgan (28) identisch ausgebildet sind und die einander zugewandten Querflächen (30) V-förmig mit divergierenden Radanlageflächen ausgebildet sind.

10. Gleitkufe nach einem der Ansprüche 1 bis 9, **dadurch gekennzeichnet, daß** die Spanngurte elastisch dehnbar ausgebildet sind.
